# EUROPEAN PATENT APPLICATION

(11) **EP 2 056 628 A1**
(43) Date of publication of application: **06.05.2009**
(21) Application number: 07021192.5
(22) Date of filing: 30.10.2007
(51) Int. Cl.: H04W 4/00

(54) **Communication network element and method of switching activity states**

(71) Applicant: Nokia Siemens Networks Oy, 02610 Espoo (FI)
(72) Inventor: Breuer, Volker, Dr., 16727 Bötzow (DE); Gustrau, Jörg, 81549 München (DE); Krause, Jörn, Dr., 12107 Berlin (DE); Lamprecht, Frank, 10439 Berlin (DE); Martos-Riano, Demian, 10115 Berlin (DE); Ulrich, Thomas, 67098 Bad Dürkheim (DE)
(74) Representative: Bruglachner, Thomas E.

(57) **Abstract**

A communication network element for a communication network having cells is provided, the communication network element comprising a generation unit adapted to generate a switching signal based on a communication load in a cell of the communication network, wherein the switching signal is adapted to switch an activity state.

## Description

### Field of invention

The present invention relates to the field of communication network elements and methods of switching activity states of network elements, a program element and a computer readable medium. In particular, the present invention relates to base stations of communication networks and methods of switching on/off such base stations.

### Art Background

Nowadays mobile communication networks are widely used. These communication networks comprise a plurality of network cells each having at least one base station used to receive and transmit signals from user equipment, e.g. mobile phones or PDAs. A plurality of different environments or systems are known, e.g. GERAN, UTRAN, E-UTRAN, or WLAN. For ensuring a good performance of the communication network the performance of single communication channels has to be known. In some of these environments the performance of the single communication channel is estimated on known so-called pilot signals transmitted by the base stations and/or user equipment. On the receiving side the channel performance can be determined based on the decoding of the known pilot signals.

Moreover, power consumption at base stations is especially high taking into account operation of power amplifiers and equipment operation in general.

Thus, there may be a need for a communication network element, a method for switching a communication network element, a program element, and a computer readable medium providing reduced energy consumption.

### Summary of the Invention

This need may be met by the subject-matter according to the independent claims. Advantageous embodiments of the present invention are described by the dependent claims.

According to an exemplary aspect of the invention there is provided a communication network element for a communication network having cells, the communication network element comprising a generation unit adapted to generate a switching signal based on a communication load in a cell of the communication network, wherein the switching signal is adapted to switch an activity state.

According to an exemplary aspect of the invention there is provided a method of switching activity states of network elements of a communication network, the method comprising generating a switching signal based on a load state, transmitting the switching signal, receiving the switching signal, and setting an activity state based on the received switching signal. In particular, the switching signal may be generated by a processing or generating unit of a network element and may be transmitted to another network element or may be transmitted in the same network element to another unit of the same network element. Thus, the generated switching signal may be adapted to switch the activity state of the same network element or of another network element.

According to an exemplary aspect of the invention a program element is provided, which, when being executed by a processor, is adapted to control or carry out a method according to an exemplary aspect of the invention.

According to an exemplary aspect of the invention a computer-readable medium, in which a computer program is stored which, when being executed by a processor, is adapted to control or carry out a method according to an exemplary aspect of the invention.

In this application the term "communication load" may particularly denote a load, e.g. a number of active communication links or an amount of transferred data, in a communication cell, wherein a communication cell may be either a network cell of a large communication network, e.g. comprising a base station adapted to handle a plurality of mobile communication elements of different users, or may be a home network, i.e. a network cell build by a single home base station, which is adapted to handle the communication of a single user or subscriber, e.g. a base station of arranged in a house of a single person or a family. Thus, the load may be caused by several mobile communication elements in case of the large network cell. In the case of a home network cell the load of the cell may in particular vanish in case the network element, e.g. portable phone, is not present in the area of the home base cell. Thus, the load which is to be used as a basis for generating a switching signal may in this case be the position of the respective network element of the home base cell. That is, the switching signal may be generated based on the position of the respective network element, e.g. may be generated when the network element approaches or reaches the home cell. Summarizing, the switching signal may be generated based on an actual load in a network cell and/or based on a position of a network element in the communication network.

In particular, the communication network may be a mobile communication network, e.g. a network based on LTE/SAE, UMTS or GERAN technology. By providing a switching signal which is adapted to switch an activity state of a network element, e.g. of a base station, it may be possible to reduce energy consumption of the communication network, e.g. of the respective base station which is switched off or into a stand-by mode by the switching signal. Furthermore, it may be possible to reduce the amount of electromagnetic radiation emitted by the respective network element, e.g. the respective base station.

Thus, it may be possible to reduce the power consumption of the network element, e.g. a base station of a network cell. In particular, it may be possible to reduce the number of pilot signals transmitted to determine performance levels of channels or sub-bands since sub-bands not necessary to provide a sufficient number of communication paths or links may be switched off, e.g. switched to a stand-by mode, in which no channel estimation has to be performed anymore. Furthermore, the amount of electromagnetic radiation emitted by the respective base station may be reduced.

A gist of an exemplary aspect may be seen in the providing of a power saving mechanism relating to base stations of a mobile communication network. In general, only the base stations needed to perform the communication are switched into the active state, while the base stations not necessarily needed may be switched to a power saving state, e.g. a stand-by mode or state. Thus, it may be possible to reduce the power consumption of the base station which may otherwise be especially high due to the operation of power amplifiers and equipment in general. It goes without saying that of course more than one base station of the communication network may be switched by one or a plurality of respective switching signals.

Next, further exemplary embodiments of the communication network element are described. However, these embodiments also apply to the method of switching network elements, the program element, and the computer readable medium.

According to another exemplary embodiment of the communication network the communication load relates to a location update and/or a paging load. In particular, the location updating may relate to a location of a communication device, like a mobile phone, e.g. whether the mobile phone is present in a specific micro cell or home cell, independent whether the mobile phone is in an active state or an idle state.

According to another exemplary embodiment of the communication network the communication load relates to an actual transferred data volume. In particular, the communication load may be indicative for the amount of transferred data and/or active communication channels in the communication network, in particular to the amount of transferred data in a specific macro cell or micro cell of the communication network.

According to another exemplary embodiment of the communication network element the activity state relates to a level of power consumption. That is, the activity states may be distinguished by their respective power consumption. Thus, it may be possible to provide a hierarchical structure in which each activity state relates to specific power consumption.

According to another exemplary embodiment of the communication network element the activity state is one of the group consisting of an active state, a hot stand-by state, and an inactive or stand-by state.

In particular, the hot stand-by state or mode and/or the inactive state or mode may denote states in which no pilot signals are generated and transmitted and only minimum information for synchronization maintenance of the UEs, access allowance and initial access indication for power up mode may be provided. In addition, in the "hot stand-by" modus a cell may still have a minimum control signal transmission, which allows its detection by UEs. Furthermore, the inactive state or only stand-by mode may be a state in which the network element is switched off or at least nearly switched of so that the energy consumption is greatly reduced and a respective activation may take a longer time than an activation starting from the hot stand-by state.

According to another exemplary embodiment of the communication network element the network element is a base station. In particular, the base station may be a home base station or a base station of a macro cell of a communication network or a base station of a micro cell or a pico cell.

In this application the term "macro cell" may particularly denote a cell of a network covering a large area and comprising a single base station of the largest dimension, e.g. transmitting power. Such a macro cell may include several micro or pico cells all comprising a respective base station having a transmitting power which is much smaller than the transmitting power of the macro cell. Such micro/pico cells may be implemented in the same area as the macro cells to provide so-called hot-spots which may have high communication levels at predetermined points in time. For example, such a hot-spot forming a micro cell may be a shopping mall during shopping hours or a stadium during or in particular shortly before or after a sporting event. That is, a pico base station may be installed in a shopping mall to increase the capacity. However, the traffic may be low at the evening most of the time. But it may be not possible to shut off the cell completely during night times as the traffic may be temporarily high, e.g. when a movie in a cinema of the shopping mall ends. An interactive mechanism may therefore be provided to identify when the cell can be switched-off, together with additional BTS HF (High Frequency) and even BB (Baseband) functions. A similar situation may arise at a sports stadium, where mobile communications activity changes dramatically throughout the day, along with the events' schedules and flows of spectators.

According to another exemplary embodiment of the communication network element the base station comprises a transmitter and a receiver, wherein the activity state relates to the transmitter. In particular, the switching signal may be adapted to switch the activity state of the transmitter and/or the receiver, i.e. may be adapted to switch on/off the transmitter of the base station, while preferably the receiver of the respective base station may always be switched on.

Thus, it may be possible that the base station, e.g. a micro cell or pico cell base station, is ready to receive at any time, so that it can detect a new active mobile communication device, e.g. a mobile communication device which sends to a macro cell base station which covers the area of a micro cell or pico cell the respective base station relates to.

According to another exemplary embodiment of the communication network element the switching signal is adapted to switch an activity state of the network element itself or of another communication network element.

In particular, the network element may be a macro cell base station of a first macro cell and the switching signal generated from this first macro base station may be adapted to switch either an activity state of a second macro base station of a second macro cell or to switch an activity state of a micro or pico cell of the same macro cell. Alternatively, the network element may be a user equipment (UE) or subscriber equipment, e.g. a mobile phone or a PDA, which generate a switching signal when the user equipment approaches or enters its home zone or home cell. Thus, it may be possible to activate the home base station when the respective user equipment approaches its home cell. Additionally, it may be possible for the subscriber to associate automatic tasks to be performed when he approaches its home cell and, by extension, when he enters the HNB cell, e.g. switching on lights or air conditioning devices. In particular, the network element, e.g. the home base station and/or the mobile phone, may comprise an additional switching element adapted to inhibit a deactivation or activation by the switching signal.

According to another exemplary embodiment of the communication network element the switching signal is adapted to switch specific communication channels of a communication network element. In particular, the switching signal may be adapted to switch and/or may be related to the switching of specific communication channels of a communication network element

Thus, it may be possible to activate (switch on) and/or inactivate (switch off) communication channels or sub-bands depending on the actual communication load in a specific network cell. For example, in case of the home cell the home base station may be deactivated or switched into a stand-by mode in case the respective network element, e.g. user equipment, leaves the range of the home cell, and may be activated again, when the respective user equipment enters the range of the home cell again. In case of a macro cell base station it may be possible to deactivate only specific communication channels, e.g. frequencies, and/or specific micro/pico cells and the respective base stations depending on the actual load in the macro cell and/or the cells of the respective micro/pico base stations. Thus, the energy consumption of the base cells may be reduced, in particular, since no pilot signals have to be transmitted for all channels and/or from each base station. In such a stand-by mode only minimum information for synchronization maintenance of the UEs, access allowance and initial access indication for power up mode is provided. In particular, a base station may be switched off or switched into a stand-by mode at a predetermined time after last user equipment has left the range of the specific base station. In particular, it may as well be possible to shift the whole load from one network element, e.g. base station, to another to enable deactivation or switch off of the one network element, e.g. base station.

According to another exemplary embodiment of the communication network element the generation unit is adapted to generate the switching signal in case the actual load equals a predetermined threshold level. In particular, the switching signal may be generated either when the actual communication load falls below a given threshold, then a switching signal may be generated adapted to switch off or down one or more base stations or sub-bands, or when the actual communication load rises above the given threshold, in which case a switching signal may be generated which switches on or activates additional base stations or sub-bands of base stations. The network will typically monitor the load in the macro cell for congestion control and/or for decision whether a base station is activated or deactivated. This information may be used as well to define the threshold for the traffic in the macro/micro/pico cell. Optionally different thresholds may be chosen for the switching off and switching on of the network element, e.g. the base station.

According to another exemplary embodiment of the communication network element the switching signal is adapted to switch radio frequency equipment of a network element. In particular, the switching signal may be adapted to switch on/off radio frequency equipment while maintain the working of central processing units of the network element so that the network element may be switched on/off again.

According to another exemplary embodiment the communication network element further comprises a processing unit adapted to generate an activity signal based on active network elements in the communication network. In particular, the processing unit and the generation unit may both be formed by a single or several processors and the activity signal may correspond or contain information about the fact which network elements, e.g. macro, micro, or pico base stations, are active or in stand-by mode or which network elements have changed their activity state recently, e.g. after a last updating. This activity information signal or broadcast system information may be transmitted from one network element to another network element in order to inform said other network element about active network element, e.g. base stations.

According to another exemplary embodiment of the communication network element the communication network element is a base station associated with a respective network cell.

According to another exemplary embodiment of the communication network the base station is adapted to determine positions of user equipments in the respective network cell. In particular, the base station may be further or alternatively adapted to determine an interference level.

In particular, the position determination may be performed periodically, e.g. using a specific time interval, event driven, e.g. when the load is above a given threshold, or on demand of the base station or network, e.g. in case the base station and/or network considers unloading the respective cell, e.g. macro/micro/pico cell, or else activating an until then inactive cell, e.g. macro/micro/pico cell, in order to enable resources and share its load or else improve or support mobility and hand-over conditions of the UEs. According to another exemplary embodiment of the communication network element the generation unit is adapted to generate a switching off signal only in case no user equipment is present in the respective cell and/or has been handed-over to another cell. Such a hand-over may be performed to empty a given cell of active communications, so that the respective cell may be deactivated, for example.

Summarizing an exemplary aspect of the present invention may be seen in providing a base station adapted to reduce the power consumption of the base station (BS) equipment since the power consumption of the BS equipment of operators is mainly due to high power amplifiers. During non-busy hours, broadcast information and pilots may be transmitted only. So far, reducing the power for these transmissions has not been an option for UTRA or E-UTRA (LTE), since incorporating these changes also at the UE side would require reconfiguration effort and signaling (E-UTRA - Evolved Universal Mobile Telecommunications System (UMTS) Terrestrial Radio Access, LTE - Long Term Evolution, UE - User Equipment).

E-UTRA has different bandwidth sizes of 1.25, 2.5, 5, 10, 15, and 20 MHz and the DL (downlink) transmission is performed on a packet basis by using certain temporary resource blocks identified by frequency position and timing. For good UE channel estimation, the pilots may be distributed over the entire DL band and transmitted at rather high power, because the pilots need to be reliable and have to cover the entire cell.

According to this exemplary aspect of the invention the problem mentioned above may be solved in the following. In a system like E-UTRAN, based on OFDM (Orthogonal Frequency Division Multiplexing), it may always be possible to switch off certain frequency sub-bands without impact on the availability of the system. In case of low traffic hours it may not be necessary to use all frequency resource blocks as done during maximum load situations. Thus, not transmitting the pilots at certain frequencies may allow for reducing the momentary output power. The transmission bandwidth currently used by an eNodeB (evolved Node B) may be adjusted e.g. autonomously by the eNodeB itself. Alternatively, the adjustment may be controlled by a central instance, e.g. relying on long term predictions and observations. Information concerning the current operation may be exchanged via the so-called X2 interface, for instance. Another option may be the control and exchange via O&M (Operations and Maintenance). To avoid ping pong effects, the adjustment may be based on thresholds. As no pilots are transmitted at the switched off frequency sub-bands, no UE channel estimation is available. However, the UE can be aware that those specific sub-bands are switched off as adjacent sub-bands (i.e. OFDM frequencies) which would normally have a pilot, too.

A specific exemplary embodiment may be the following. In case the measurements of the neighbor cells are based on the broadcast bandwidth only or on a bandwidth to be indicated by the eNodeB, as discussed currently, the switching of resource blocks may have no negative impact on network performance. On the contrary, switching may be done in a coordinated manner across the eNodeBs e.g. via the standardized X2 interface between the eNodeBs or via O&M. This may allow for reducing the transmission for the remaining active users without impacting their service requirements. Also, the inter-cell interference may be reduced.

Another exemplary embodiment of the presented aspect concerns the radio interface of home base stations. As described above, the pilots may be switched off according to bandwidth/frequency. Applying an additional sleep pattern in the time domain (Discontinuous Transmission - DTX) may allow for further reduction of the power consumption. To this end, the broadcast channel may go into a sleep or standby mode providing only minimum information for synchronization maintenance of the UEs, access allowance and initial access indication for power up mode. The additional sleep pattern may be activated or programmed (optionally via the UE) by the end user. Since, in this case, the user group may be rather limited, the group may decide whether to accept a delay by activating such a power saving feature.

Next, further exemplary embodiments of the method of switching network elements are described. However, these embodiments also apply to the communication network element, the program element, and the computer readable medium.

According to another exemplary embodiment of the method at least one network element is a first base station of the communication network, and wherein the setting of the activity state is performed by setting the activity state of the first base station.

According to another exemplary embodiment of the method the generating of the switching signal is performed by the first base station. In particular, the first base station may be a base station of a micro or pico cell which actively scans its respective cell in order to determine the communication load in its cell.

According to another exemplary embodiment of the method the switching signal is generated in case the communication load is above a predetermined threshold level. In particular, the threshold level may be determined in such a way that it is associated or corresponded with an amount of active communication channels and/or an amount of transferred data in the respective cell of the first base station, e.g. in case the respective communication load is high enough that it is efficient to activate the first base station taking into account the respective energy consumption of the first base station.

According to another exemplary embodiment the method further comprises interrogating a further network element whether the first base station should be switched according to the generated switching signal. In particular, the first base station may be a base station of a micro cell or a pico cell while the further network element may be a second base station, e.g. a base station of a macro cell.

According to another exemplary embodiment of the method the generating of the switching signal is performed by the further network element. In particular, the further network element may be a central network entity or a further base station e.g. a base station of a macro cell, while the first base station is a base station of a micro cell or pico cell which belongs to the macro cell of the macro cell base station. In this case the first base station may be a passive base station in that sense that it does not necessarily scans the communication load.

According to another exemplary embodiment of the method the communication network comprises a plurality of base stations which are commonly addressed by the switching signal. In particular, all micro or pico cell base stations belonging to a single macro cell may be activated together by using a single switching signal which may be communicated to all micro or pico cell base stations, e.g. in case a high communication load is determined. Alternatively, only specific base stations may be activated depending on their respective locations and/or positions of network elements.

According to another exemplary embodiment the method further comprises determining positions of active communication devices, and transmitting the switching signal to network elements corresponding to the determined positions. In particular, the communication devices may be mobile phones or PDAs, while the network elements may be a plurality of base stations of micro cells or pico cells. Thus, it may be possible to send the switching signal only to specific ones of a plurality of base stations, e.g. only to the base stations of pico cells in which an active mobile phone is detected or in which a given number of active mobile phones is detected.

According to another exemplary embodiment of the method in the step of setting the activity state, a base station of the communication network is switched on. In particular, a transmitter of the base station is switched on while a receiver of the base station may be always switched on. Moreover, the switching may be initiated and/or controlled by a central network entity or by the base station itself.

According to another exemplary embodiment the method further comprises performing a hand-over of a communication from a first base station to the newly switched on base station. In particular, the first base station may be a base station which has handled the communication of a mobile communication device before the hand-over and the communication may be handed-over to the base station which is newly switched on due to the generated switching signal. Such a hand-over may be initiated by a central network entity and/or by the base station itself, e.g. the newly switched on base station or the first base station.

According to another exemplary embodiment the method further comprises notifying a central network entity that the hand-over has been performed and/or that the base station has been switched on. In particular, the central network entity may set up a list of all active network elements, e.g. base stations, of a given cell, e.g. a macro cell of the communication network. This list may be transmitted to every communication network device, e.g. every macro cell base station, of the communication network.

It goes without saying that the above described embodiments may also comprise the turning off of base stations. For example, a first base station may be switched off in case a load of the first base station and/or of a macro cell base station the first base station belongs to is low, e.g. below a given threshold. In that case a switching signal may be generated and/or sent to switch off the first base station and a notification may be sent to a central network entity that the respective base station is switched off. In particular, the transmitter of the respective base station may be switched off.

The advantages of the presented solution may be among others:
- When implemented in home base stations, the solution may allow for less radiation.
- The power consumption of base station equipment may be reduced.
- The network performance may not be affected by the presented solution.
- Taking into account secondary power consumers such as ventilators for the power amplifiers, the power saving in OPEX (OPerational EXpenditures) may be considerable.

It has to be noted that exemplary aspects and exemplary embodiments of the invention have been described with reference to different subject-matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject-matters, in particular between features of the apparatus type claims and features of the method type claims is considered to be disclosed with this application.

The exemplary aspects and exemplary embodiments defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Fig. 1 schematically illustrates a hierarchical cell structure.
Fig. 2 schematically illustrates a scenario in case of neighboring intra-system cells.
Fig. 3 schematically illustrates another scenario in case of neighboring intra-system cells.
Fig. 4 schematically illustrate networks signaling's relevant nodes and interfaces.
Fig. 5 schematically illustrate transmission versus time in E-UTRA

### Detailed Description

The illustration in the drawing is schematically. Identical or similar elements are labeled with identical or similar reference signs.

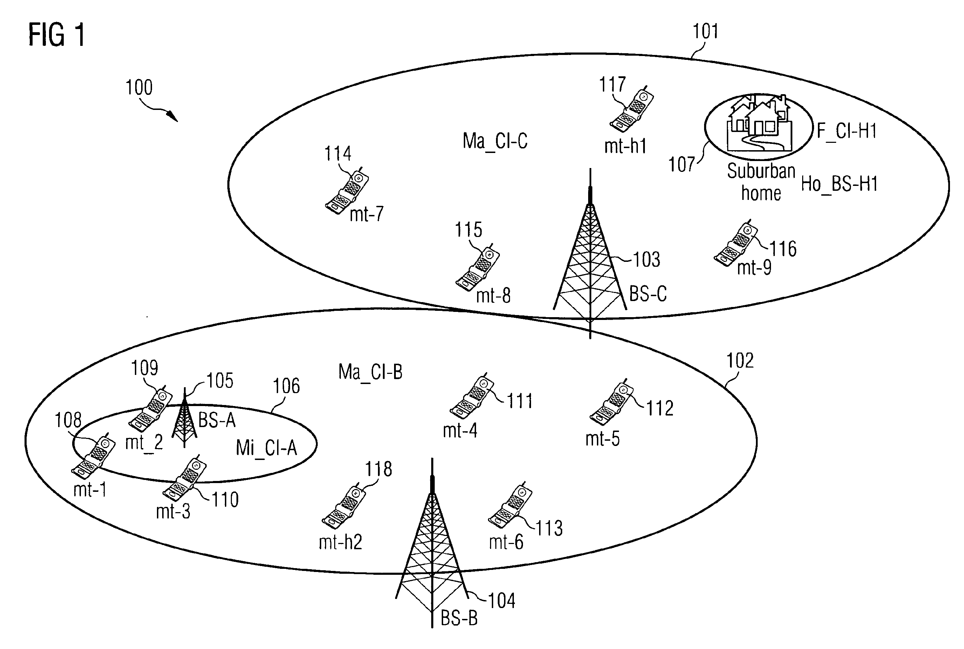

In the following, referring to Figs. 1 to 5, some basic principles of communication network elements according to exemplary embodiments will be explained.

Fig. 1 schematically illustrates a hierarchical cell structure. A Mobile Communication Network (MN) 100 comprises a plurality of cells. Due to clarity reasons only two macro cells (MA) 101 and 102 are depicted having base stations (BS) labeled 103 and 104, respectively. Furthermore, a base station 105 of a micro or pico cell 106 is schematically depicted in Fig. 1 which is part of or which is a sub cell of the macro cell 102. Moreover, a home cell 107 is schematically depicted which forms part of the macro cell 101. Additionally, a plurality of mobile communication devices or user equipments are depicted in Fig. 1 and labeled by 108 to 118.

The operating principles of the hierarchical MN will be explained afterwards in more detail. However, a short explanation of a switching process is given in the following. In a first example it is assumed that the mobile communication devices 108, 109 and 110 are idle so that the base station 105 of the pico cell 106 is in-active while the base station 104 of the macro cell 102 is active. In case one of the mobile communication devices 108, 109 and 110 is turned on, e.g. the mobile communication device 108 a connection is established with the macro base station 104. Furthermore, the pico cell base station 105 detects the active mobile communication device 108 and informs the macro base station 104 or a central network entity. Upon this information the pico cell base station 105 receives a signal to go active wherein the signal may be given by the macro base station 104 or the central network entity. After the activation of pico cell base station 105 the macro cell base station 104 hands-over the mobile communication device 108 to pico cell base station 105 and adds the pico cell base station 105 to its list of active neighboring cells. This first example describes a situation in which the pico cell base station itself actively searches its pico cell for new active mobile communication devices. Thus, the embodiment may be called a "pico sniffing" embodiment.

However, in another embodiment the pico cell base station may not actively search for new active mobile communication devices leading to an embodiment without pico sniffing. Such an example may be described in the following. The mobile communication devices 108, 109, 110, 111, 112 and 113 may be active and connected to macro cell base station 104 of macro cell 105 while pico cell base station 105 is in-active as same as the mobile communication device 118. In case the mobile communication device 118 goes active it connects to the macro cell base station 105. This additional active mobile communication device 118 may cause that a threshold of the macro cell base station 105 is exceeded so that the macro cell base station 105 sends an activation signal to the pico cell base station 105 together with activation signals to other or all pico cell base stations in the macro cell 102. Consequently, the pico cell base stations present in macro cell 102 go active, the macro cell base station updates its list of active neighboring cell and informs all connected mobile communication devices. Thus, the mobile communication devices 108, 109, and 110 detect the active pico cell base station 104 and inform the macro cell base station 104. Upon this information the macro cell base station hand-over the mobile communication devices 108, 109, and 110 to the pico cell base station 105.

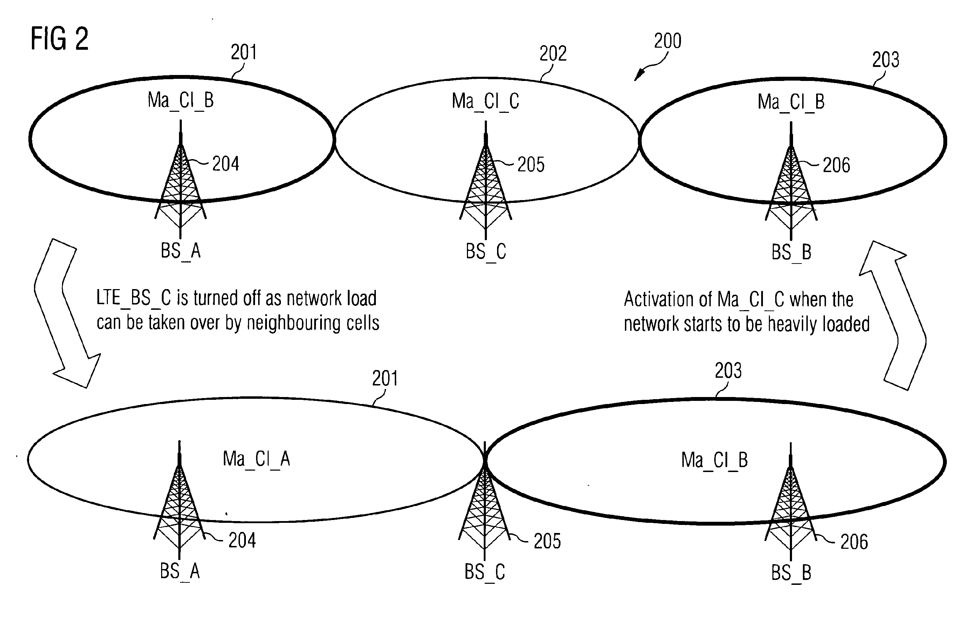

Fig. 2 schematically illustrates a scenario in case of neighboring intra-system cells of a Mobile Communication Network 200. The MN 200 comprises a plurality of Macro cells of which only cells (MA_C1) 201, 202, and 203 are depicted each comprising a base station 204, 205, and 206, respectively. In case it is identified that the load in the network is low one of the base stations may be brought into stand-by mode and the respective load of the deactivated cell or base station is taken over by the remaining base stations of neighboring cells, in particular the remaining base stations may increase their transmitting power in order to cover a greater area. In the second line of Fig. 2 the corresponding situation is depicted, i.e. the operational state in which the MA 202 is deactivated, while the transmitting or sending power of the base station 201 and 203 is increased which increasing is schematically depicted by the increased circles depicted about the respective bas stations.

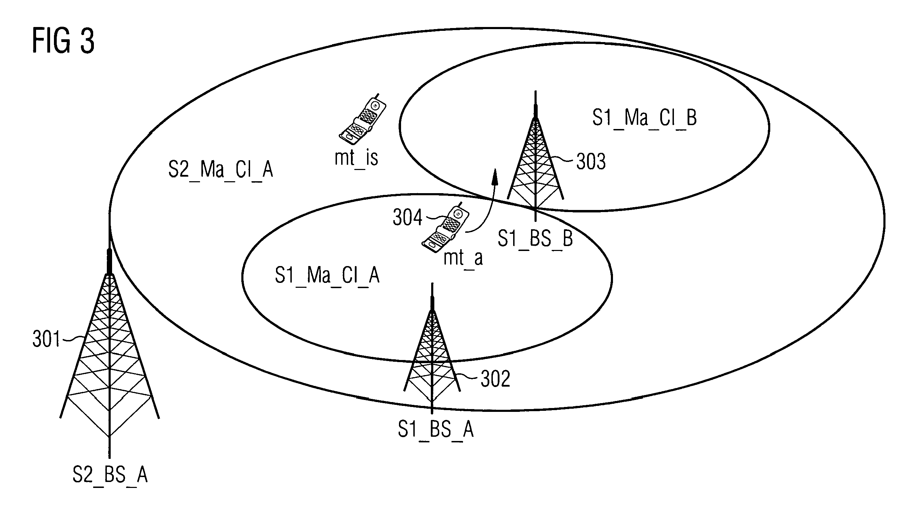

Fig. 3 schematically illustrates another scenario in case of neighboring intra-system cells. In particular, Fig. 3 shows an arrangement wherein different base stations or cells correspond to different RAN technologies, e.g. 3G and LTE, or to two different operators, i.e. Fig. 3 shows not one single Mobile Communication Network but two networks which are distinct from each other. In particular, base station 301 may relate to a first RAN technology or operator while base stations 302 and 303 may relate to a second RAN technology or operator. In that case a roaming agreement between the two networks may be necessary in case a hand-over of a mobile communication unit, e.g. mobile phone, shall be performed between the two networks.

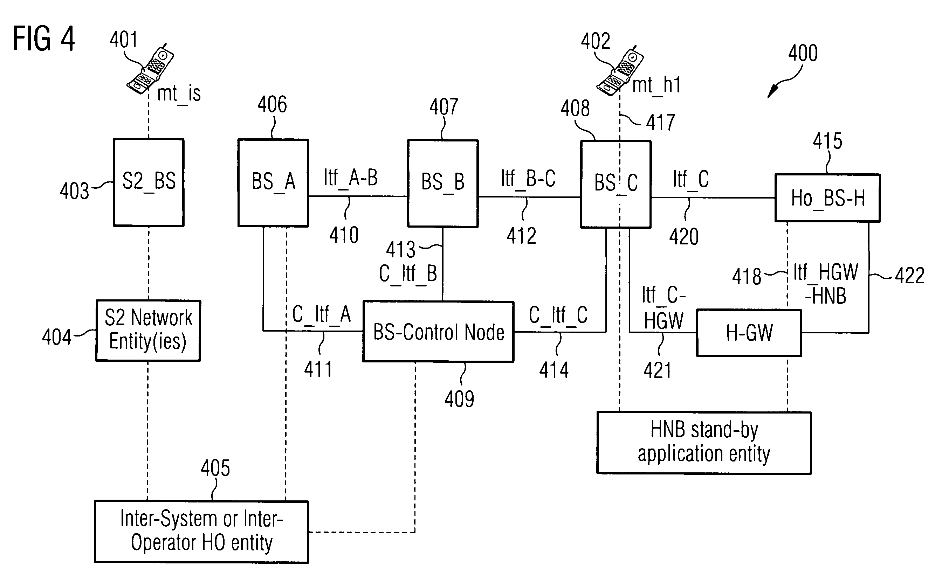

Fig. 4 schematically shows a network diagram 400 which relates to the situation of Fig. 3 and which comprises several network elements. In particular, two mobile phones 401 and 402 are depicted, wherein the first mobile phone 401 relates to a first system S2 having a base station 403 (corresponding to base station 301 of Fig. 3) and covering S2 network entities 404. Furthermore, Fig. 4 shows an inter-system or inter-operator entity or unit 405 which is adapted to hand over the first mobile phone 401 to a second system (corresponding to the system of base station 302 and 303 of Fig. 3). The second system comprises the three base stations 406, 407, and 408 (similar to the base stations of Fig. 2). Furthermore, the second system comprises a base station control node 409 adapted to handle the hand over between the different base stations of the second system and which are schematically depicted by the lines 410, 411, 412, 413, and 414. The second mobile phone 402 may be subscribed to a home cell or femto cell comprising a home base station 415, a home network stand-by application entity 416 adapted to switch activity states of the home base station 415 which may be triggered by the second mobile phone 402 and which is indicated by the dashed lines 417 and 418. Furthermore, the home cell comprises a HNB-GW unit 419 adapted to handle the hand over from a macro/micro/pico cell of the second system to the home cell which hand over is indicated by the lines 420, 421, and 422.

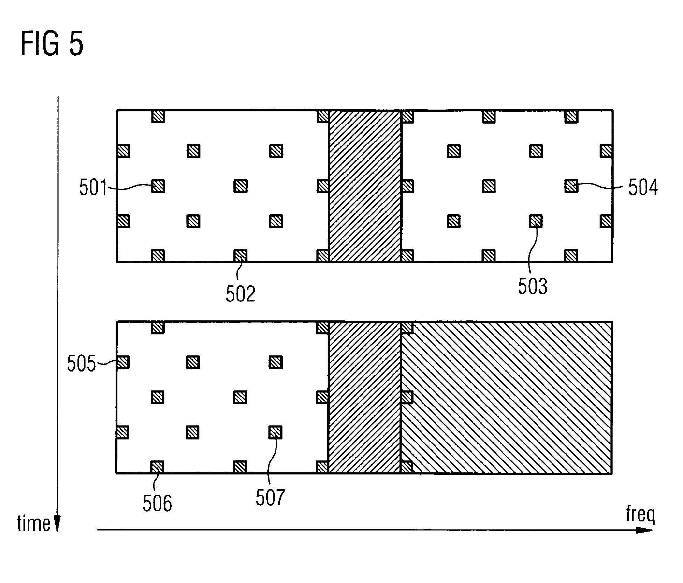

Fig. 5 schematically illustrates transmission versus time in E-UTRA. In particular, Fig. 5 illustrates two activity states and the corresponding number of sent pilot signals. In the upper part of Fig. 5 downlink pilot symbols are transmitted at all times (ordinate in Fig. 5) and for all frequencies (abscissa in Fig. 5), which pilots are indicated by the black squares 501, 502, 503, and 504. In the lower part of Fig. 5 a sub band of frequencies is switched off so that only in the sub band shown at the left in Fig. 5 pilot signals 505, 506, and 507 are transmitted, while the right part (higher frequencies) is built by unused resource blocks during low traffic hours.

Summarizing exemplary embodiments of the invention may be applied to all mobile communication technologies, and in particular to LTE/SAE, UMTS and GERAN. Some exemplary embodiments may address power saving mechanisms in the radio access network (RAN) of Mobile communications Networks (MNs). Power consumption at base stations (BS or BTS) are especially high, taking into account operation of power amplifiers and equipment operation in general. Therefore, power-saving interaction between BTSs may be devised in various forms and associated inter-BTS signaling may be addressed. In particular, a method to switch off a particular cell (and potentially a specific BTS) may be devised. In terms of equipment power management, the BTS would power down Radio Frequency equipment and maintain central processing units working, minimized control traffic functions with the MNs, switching so to say to a stand-by modus. Resuming activity i.e. making specific radio cells available requires a start-time noted as Ts. In addition, a "hot stand-by" modus is also considered, where a cell still has a minimum control signal transmission, which allows its detection by UEs. These methods do not need UEs involvement and have no impact to fulfilling traffic QoS requirements.

The case of a Home BTS or Femto BTS may be additionally treated. These base stations combine properties in an unprecedented way, among them two that convey a dual nature of PLMN node and user device:
- The HNB (home base station) is a User Device, i.e. it serves and is tightly related to one or more mobile users subscribed to one or more Public Land Mobile Networks (PLMNs)
- The HNB is part of (or integrated) one or more PLMN infrastructures in order to provide the subscribed services to the appropriate users. It supports Closed Subscriber Group Cells, which can only be accessed by specific subscribers.

In this context, the femto BTS can most of the time be in stand-by, and its triggering is only associated with specific UEs entering its range of coverage. It is highly relevant that the stand-by time of the device is minimized, in order to reduce electromagnetic radiation at home in order to reduce SAR (Specific Absorptions Rate) from the HNB to the human environment, not only due to general safety reasons, but in particular to the general public's perception that the device should transmit as little as possible.

In general, BTS for mobile communications require permanent transmission of pilot and broadcast channels. These channels are required for the terminal in order to be able to detect the base station, i.e. a UE will scan the frequency band and detect the pilot channel.

In areas with high traffic demands, the use of hierarchical cell structures is common and part of RRM (Radio Resources Management) strategies. Hierarchical cell structures consist of an overlaying macro layer and additional micro and pico cells to boost the capacity in hot-spots (see Fig. 1 macro cell 102 (Ma_Cl_B) is the overlay cell of micro cell 106 (Cl_A), macro cell 101 (Ma_Cl-C) is the overlay cell of pico cell 107 (f_Cl-H)). These cells are in general operated at different frequency bands. In case they are to be operated at the same frequency band, additional coordination falls under the domain of ICIC (Inter-Cell Interference Coordination), which would involve signaling together with the proposed switch-on and switching-to-standby signaling mechanisms.

So-called RRM's load-sharing mechanisms between cells, which may involve forced handover from one cell to the other, are well-known and involved as well -but this time to move all load, i.e. active UEs' Radio Bearers in Uplink and Downlink, over to a single cell in order to turn the original one off or to hot stand-by. In terms of RRM, power-saving concerns would lead not to load sharing but to full load assignment.

Finally, it is interesting to observe that these mechanisms need to be supported in inter-system environments (GERAN, UTRAN, E-UTRAN, WLAN, WiMax...). The different cells can correspond to other technologies, while the power saving mechanisms may hold true, underlay cells are switched on and back to stand-by according to the capacity of the overlay cell.

Other existing mechanisms related to UE capabilities, supported/preferred technology, UE speed or UE position, are reused for decision-making purposes.

Relevant for exemplary embodiments of this invention, since it will need to be standardized, may be the specific signaling within the network in order to trigger the desired behavior. However, the idea is applicable in several kinds of mobile networks. Fig. 4, which provides a network diagram, actual addresses several of the standardized networks simultaneously. A short guidance is nevertheless provided here,
- Signaling involves RAN nodes, and this is a pure RAN feature; the Core Network is not involved.
- Figure 4: the node "BS -Control Node" would stand for the BSC in GERAN or the RNC in UTRAN
- Straight signaling between Base Stations is proper of WiMAX, LTE, HSPAevo, (since in these systems the Base Station is at the same time a control node)
- Intersystem signaling is by means of transparent containers between the controlling node of a given system and the controlling node of the target system (through core network nodes, but without their involvement)
- Involvement of a HNB GW (to be considered here an additional RAN node) or else an Application Server is for the particular case of the HNB scenario. It is the single case where explicit UE involvement may be needed and the stand-by functions of the HNB may involve an application client in the UE and an application server in the PLMN network that in turn controls the HNB.

In most of the cases, in the present application any network involvement shall be understood as an interaction with and driven by the appropriate control node in each of the existing technologies.

In the following the principles of exemplary embodiments may be described in more detail.

The network will typically monitor the load in the macro cell for congestion control. This information could be used as well to define the threshold for the traffic in the macro cell. The micro and pico base station can be kept in stand-by, by significantly or entirely reducing the output power on the pilot and common channels, i.e. the signaling channels may not be detected by terminals. When the load of the macro cell increases over a given, pre-configured threshold, the M/P cells within its area of coverage are activated (Time of activation given by Ts).

The control information broadcasted by the macro cell is enhanced with the provision of the additionally or necessary information on the newly activated cell(s), and the base station initiates the hand-over from the macro cell to the M/P cell for those terminals having a good reception of them: in the macro cell's radio signaling, a neighbor cell list is updated with the newly activated cells on the broadcast channel (after the pre-configured time Ts or, in particular, an indication from the M/P BTS that the cells have become available) and UEs in active mode can be informed individually. The indication to specific UE(s) so that they evaluate the M/P cell as a potential target cell for inter-frequency or intra-frequency HO, may be part of the load sharing mechanisms in a RAN's hierarchical cell structure, and may already be specified.

The activation indication to the M/P cell may be accompanied by applicable radio resource parameters, such as frequency bands to be served (and sub-bands, in the case of LTE), recommended maximum signaling power, etc...

A useful optimization of this mechanism may be possible when the network knows approximately the location of the UE in the macro cell. Considering Fig. 1, the activation of Mi_Cl-A 106 in order to take out load of Ma_Cl-B 102 is relevant only when a sufficient number of active UEs are within Mi_Cl-A's 106 potential range. For this reason, taking Fig. 1 scenario into account, previous knowledge of the location of the mobile terminals in Ma_Cl-B (mt_1 to mt_6, 108 to 113) helps taking the decision in advance, whether or not to activate the M/P cell. If the load related to UEs mt-1, mt-2 and mt-3 is irrelevant among the total load of Ma_Cl-B 102, the network may decide to keep Mi_Cl-A 106 in stand-by. Based on the information of the UEs only particular M/P base stations will be activated by the network and not all M/P base stations within the macro cell.

Several methods for UE location purposes have been devised, and the network can take advantage of these methods in order to take the necessary decisions. In addition, the network can rely on reception measurements obtained at the M/P BTS, which can listen to its environment and evaluate if a relevant part of the Macro cell's UE population is in its potential coverage range. This "Presence Evaluation" measurement(s) can be provided to the network either periodically, event-driven (when above a certain threshold) or else only on demand (when network actually considers unloading the macro cell).

The decision to activate a M/P cell, when the location of specific UE(s) is known (e.g. "VIP" UEs with high QoS guarantees), can be made subject to diverse criteria not only related to the load of the macro cell, but also to the actual interest to improve service to these UE(s) whenever possible.

An alternate method to optimize the cell activation, without having to rely on UE location procedures, or else "presence evaluation" methods, is to actually have radio signaling control sent only from time to time, (with the optional indication that the cell is in stand-by modus). In this manner, the UE(s) is able to realize the presence of the M/P cell in its environment and signal to the network HO readiness. The network then activates the cell before ordering the HO to the M/P cell, as part of the HO preparation. This alternate method, in contrast to the state of the cell in stand-by, can be described as in hot stand-by.

Taking into account previous considerations, it is also possible to imagine a network escalated activation from stand-by to hot stand-by, and then from hot stand-by to a fully functioning cell when there is a UE(s) which detect it and are ready for HO.

In order to cover all possible options for this power saving mechanism, the following approaches involving the UE can also be considered:
- In the macro cell, the broadcasted system information on neighboring cells can contain details on the actual availability of the cells and their status (available, load level, hot stand-by, stand-by)
- The UE can request the activation of one of the cells in hot stand-by or stand-by

It is also relevant to describe the mechanisms for the M/P cell deactivation. This can be either network triggered, when the load of the macro cell is below a certain threshold. Then the UE(s) in the M/P cell are Handed Over to the macro cell by already specified means. Otherwise, the M/P cells may also have mechanisms to turn back to hot stand-by, and finally to stand-by, some Tx time after the last UE leaves the cell.

In the HNB case, for a UE belonging to a specific CSG, the corresponding CSG Cells only need to be activated when it approaches. The network may therefore trigger the CSG Cell when e.g. the UE approaches its coverage area, or simply the UE is in the corresponding macro cell.

In case the UE is in idle mode (or switched off) when it enters the macro cell, and eventually the CSG Cell potential coverage area, the network is unaware of this circumstance and will not activate it. When the UE is finally powered on or switches to active mode, the UE will select the macro cell. Then, indirectly, the CSG cell activation is finally triggered by the network. The UE will then detect the CSG cell and proceed to a Handover to its corresponding home NB.

In certain circumstances where the HNB actually ensures coverage conditions, e.g. in indoor areas, beyond the radio coverage of the macro cell, the presence of the feature may lead to a situation where a UE being activated is actually without coverage. For this reason, the feature may be activated only when the user is aware of this circumstance and capable to activate the HNB by itself. Stand-by indicators are anyway available in common home appliances and this interaction will be perceived as entirely natural and even desired (as Users are concerned with exposition to electromagnetic fields and wish to reduce it). The functionality proposed here will be positively perceived by the consumer, since it enables an automatic "turn-on" of its device when entering home, without manual interaction, in most of the cases.

The mobility mechanisms in the context of CSG Cells may rely on specific UE involvement (e.g. identifying CSG Cell without relying on network involvement, but identifying specific environment conditions, such as corresponding macro cell and location conditions within the macro cell evaluated on its own). As a result, the UE may send a "HNB activation message" when the conditions are met, although the CSG Cell is not identified, and it assumes that the power saving feature is activated. This message may either be solved on the access stratum (the macro eNB, or else the controller node processes it and activates the corresponding HNB), or else on the Application Layer. The application may involve an application server in the network (see Fig. 4), or else enable straight communication between HNB and UE (even with UE out of HNB coverage). The addressed entity returns a message to the UE confirming the HNB activation, with optional information such as relevant radio parameters related to the CSG Cell, or else an error message with an error cause (HNB not reachable, HNB Failure, etc...)

Finally, it may be advantageous to extend the availability of such mechanisms, where the network indicates to the HNB that a specific authorized subscriber is approaching, in order to enable specific tasks, programmed by the Subscriber, to be executed, e.g. heating up the house, activating air conditioning, switching lights on, etc..

Furthermore, the extension of these capabilities to neighboring cells is also possible. In low load network circumstances, it is possible to turn to stand-by specific sites and ensure further coverage by appropriate radio coverage modification of the cells from the neighboring sites. The activation of the site is advantageously notified to all sites that have modified their radio coverage and, for this reason, may be managed from the BTS that is switching from/to a stand-by modus.

In the provided example of Fig. 2, BS_C 205 evaluates, based on location of its active UEs, if any, the possibility to switch to stand-by. If this is the case, it requests from neighboring BS_A 204 and BS_B 206, together with a description of the load to be transferred, if any. After confirmation of BS_A 204 and BS_B 206, BS_C 205 signals again to BS_A 204 and BS_B 206 that it starts to switching to stand-by, proceeds to reduce power transmission (while neighbor sites increase theirs, forcing handover of active UEs to neighboring cells.

In this sense, in terms of shutting down Ma_Cl_C 201 power, this is not down in an abrupt, but in a continuous way, coordinated with neighboring cells and checking UE measurements.

Switching from stand-by to normal operation is triggered by one of the neighbor sites, when its load goes over a certain threshold and the support of the cells in stand-by is needed to take over part of it.

The umbrella system may be based on another RAN technology and, in addition, be part of another mobile network with which roaming agreements are available.

The corresponding Fig. 3 represents two neighboring cells, and a UE moving from one's to the other's coverage in active mode (mt_a 304 in the Fig. 3). In this scenario it is also possible to consider that the target cell is originally in a stand-by modus and that signaling is specified from one BTS to the other in order to activate the cell in time for the HO. In this context, the source cell may have means to identify when a UE is approaching its edge. On the other side, a BTS has also means to turn to stand-by its cells and report its neighbors about it.

In case an UEs is in idle mode (in this case, mt_a 304 is in idle), it may be useful that the source cell indicates in the System Information Broadcast's Neighboring Cells List, which cells are potentially available but in a stand-by modus. The UE can then indicate to the cell its interest for a specific cell. In this case the UE turns to an active mode and the source BTS becomes aware of its presence and capable to address its potential HO requirements. Anyway, if this information is not provided, the UE may re-select to another system's cell. The corresponding behavior is explained in the following which describes how a switching of neighboring cells ON/OFF with an available external umbrella network system is performed.

The umbrella system can be based on another RAN technology and, in addition, be part of another mobile network with which roaming agreements are available.

In this scenario, the possibility of having a UE originally turned-off, being turned on in the coverage area of a cell in stand-by modus can only be solved by the availability of another Radio Access Network (in terms of technology), or another operator with roaming agreements with the original operator the UE is subscribed to. The network may have specific signaling in order to first, activate the target cell, and then trigger the inter-system HO.

Related to the numerous cases described above, and the necessary signaling in the network, for each considered RAN technology and scenario different nodes and message sequence charts may be advantageous.

The common characteristics may remain however that specific signaling may be specified in order to either trigger a transition to stand-by modus (or else activation) of cells of a base station, and in addition specific signaling shall be specified in order that a base station informs the network that it switches to a stand-by modus by itself.

Summarizing exemplary embodiments of the present invention may support the capability of switching off radio transmission/reception at a specific base station.

A basic idea may be that the network activates the micro and pico base stations' cells only if there is a traffic demand exceeding the capability of the macro cell. This means that a macro base station monitors the traffic in its cells, and when the traffic exceeds a predefined threshold in one of the cells, the macro base station reports this to the network and/or triggers the activation of micro and pico base stations, which are within the coverage area of the macro cell. In order to support the reverse process of switching off an M/P cell (Micro/Pico cell), the macro base station may periodically evaluate the load at each M/P base station (Micro/Pico base station) and evaluates the possibility to take it over.

The system information broadcasting of the macro base station's cell(s) may accordingly be updated with information on actually available cells.

For the purpose of improved UE(s) location, a novel mechanism is proposed where the M/P cell is capable of estimating the UE population connected to the macro UE from its area of coverage, by means of radio measurements of the radio uplink.

The principle may also be extended to multi-system hierarchical cell structures (the macro cell and the M/P cell work on the basis of different 3GPP technologies). The principle may also be extended to neighboring cells, when the macro cell is of a different 3GPP technology. In this particular case, the eNB switching to or from a stand-by modus may coordinate it with neighboring sites.

In the case of HNBs, it may be advantageous that the HNB activation is triggered by the UE. This may need a specific message exchange(s) between UE and network.

Related signaling updates on the radio interface, signaling between base stations (LTE) and between base stations and controller nodes (RNC, BSC) may also be possible.

It should be noted that the term "comprising" does not exclude other elements or steps and the "a" or "an" does not exclude a plurality. Also elements described in association with different embodiments may be combined. It should also be noted that reference signs in the claims should not be construed as limiting the scope of the claims.

### List of reference signs:

- 100: Mobile Communication Network
- 101: Macro cell
- 102: Macro cell
- 103: Base station
- 104: Base station
- 105: Base station
- 106: Micro cell
- 107: Home cell
- 108 to 118: Mobile communication devices
- 200: Mobile Communication Network
- 201: Macro cell
- 202: Macro cell
- 203: Macro cell
- 204: Base station
- 205: Base station
- 206: Base station
- 301: Base station
- 302: Base station
- 303: Base station
- 400: Network diagram
- 401: First mobile phone
- 402: Second mobile phone
- 403: Base station
- 404: Network entities
- 405: Inter-operator entity
- 406: Base station
- 407: Base station
- 408: Base station
- 409: Control node
- 410 to 414: Lines indicating hand overs
- 415: Home base station
- 416: Home network stand-by application entity
- 417: Line indicating triggering
- 418: Line indicating triggering
- 419: HNB-GW
- 420: Line indicating hand over
- 421: Line indicating hand over
- 422: Line indicating hand over
- 501: Pilot signal
- 502: Pilot signal
- 503: Pilot signal
- 504: Pilot signal
- 505: Pilot signal
- 506: Pilot signal
- 507: Pilot signal

## Claims

1. A communication network element (103, 104, 105) for a communication network (100) having cells (101, 102), the communication network element (103, 104, 105) comprising:
a generation unit adapted to generate a switching signal based on a communication load in a cell (101, 102) of the communication network, (100)
wherein the switching signal is adapted to switch an activity state.

2. The communication network (103, 104, 105) according to claim 1,
wherein the communication load relates to a location update and/or a paging load.

3. The communication network (103, 104, 105) according to claim 1,
wherein the communication load relates to an actual transferred data volume.

4. The communication network element (103, 104, 105) according claim 1,
wherein the activity state relates to a level of power consumption.

5. The communication network element (103, 104, 105) according claim 4,
wherein the activity state is one of the group consisting of:
active state,
hot stand-by state, and
stand-by state.

6. The communication network element (103, 104, 105) according to claim 1,
wherein the network element is a base station (103, 104, 105).

7. The communication network element (103, 104, 105) according claim 6,
wherein the base station (103, 104, 105) comprises a transmitter and a receiver,
wherein the activity state relates to the transmitter.

8. The communication network element (103, 104, 105) according to claim 1,
wherein the switching signal is adapted to switch an activity state of the network element (103, 104, 105) itself or of another communication network element (103, 104, 105).

9. The communication network element (103, 104, 105) according to claim 1,
wherein the switching signal is adapted to switch specific communication channels of a communication network element (103, 104, 105).

10. The communication network element (103, 104, 105) according to claim 1,
wherein the generation unit is adapted to generate the switching signal in case the actual load equals a predetermined threshold level.

11. The communication network element (103, 104, 105) according to claim 1,
wherein the switching signal is adapted to switch radio frequency equipment of a network element (103, 104, 105).

12. The communication network element (103, 104, 105) according to claim 1, further comprising:
a processing unit adapted to generate an activity signal based on active network elements (103, 104, 105) in the communication network (100).

13. The communication network element (103, 104, 105) according to claim 1,
wherein the communication network element (103, 104, 105) is a base station associated with a respective network cell (101, 102, 106).

14. The communication network element (103, 104, 105) according to claim 13,
wherein the base station (103, 104, 105) is adapted to determine positions of user equipments (108 to 118) in the respective network cell.

15. The communication network element (103, 104, 105) according to claim 14,
wherein the generation unit is adapted to generate a switching off signal only in case no user equipment is present in the respective cell, and/or has been handed-over to another cell.

16. The communication network element (103, 104, 105) according to claim 1,
wherein the network element is a mobile phone (108 to 118) and the switching signal is adapted to switch an activity state of a home base station (103, 104, 105).

17. A method of switching activity states of network elements (103, 104, 105) of a communication network (100), the method comprising:
generating a switching signal based on a load state,
transmitting the switching signal,
receiving the switching signal, and
setting an activity state based on the received switching signal.

18. The method according to claim 17,
wherein at least one network element (103, 104, 105) is a first base station of the communication network, and
wherein the setting of the activity state is performed by setting the activity state of the first base station.

19. The method according to claim 18,
wherein the generating of the switching signal is performed by the first base station.

20. The method according to claim 18,
wherein the switching signal is generated in case the communication load is above a predetermined threshold level.

21. The method according to claim 20, further comprising:
interrogating a further network element whether the first base station should be switched according to the generated switching signal.

22. The method according to claim 18,
wherein the generating of the switching signal is performed by the further network element.

23. The method according to claim 22,
wherein the communication network comprises a plurality of base stations which are commonly addressed by the switching signal.

24. The method according to claim 22, further comprising:
determining positions of active communication devices, and
transmitting the switching signal to network elements corresponding to the determined positions.

25. The method according to claim 17,
wherein in the setting of the activity state a base station of the communication network is switched on.

26. The method according to claim 25, further comprising:
performing a hand-over of a communication from a first base station to the newly switched on base station.

27. The method according to claim 26, further comprising:
notifying a central network entity that the hand-over has been performed.

28. A program element, which, when being executed by a processor, is adapted to control or carry out a method according to claim 17.

29. A computer-readable medium, in which a computer program is stored which, when being executed by a processor, is adapted to control or carry out a method according to claim 17.
